(19) Europäisches Patentamt

European Patent Office

Office européen des brevets

(11) Veröffentlichungsnummer: **0 491 340 A2**

## (12) EUROPÄISCHE PATENTANMELDUNG

(21) Anmeldenummer: **91121563.0**

(22) Anmeldetag: **17.12.91**

(30) Priorität: **18.12.90 DE 9017036 U**

(43) Veröffentlichungstag der Anmeldung:
**24.06.92 Patentblatt 92/26**

(84) Benannte Vertragsstaaten:
**AT BE CH DE DK ES FR GB IT LI NL SE**

(51) Int. Cl.⁵: **G01N 27/30**, G01N 27/406,
G01N 27/48

(71) Anmelder: **Haaf, Dieter**
**Hauptstrasse 16**
**W-6924 Neckarbischofsheim(DE)**

(72) Erfinder: **Haaf, Dieter**
**Hauptstrasse 16**
**W-6924 Neckarbischofsheim(DE)**

(74) Vertreter: **Heinen, Franz, Dipl.-Ing.**
**In den Pfädelsäckern 25**
**W-6900 Heidelberg1(DE)**

(54) **Werkstoff für chemische Sensoren oder dergl.**

�史 Ein mechanisch stabiler Werkstoff für chemische Sensoren, Bezugselektroden oder dergl. bei welchem im Betrieb ein Herauslösen von Metallsalzen, wie Z. B. kristallinem Kaliumchlorid durch die Messprobe nicht erfolgt und eine Verunreinigung derselben vermieden wird. Der neue Werkstoff besteht aus einem Polymer mit einer Beimischung aus einem nicht wässerigen Elektrolyten, der in einem organischen Lösungsmittel gelöste Ionen aufweist. Dieses Polymer kann ein Duroplast, wie z. B. Polyesterharz, Epoxydharz oder ein nicht hologenisiertes Thermoplast, wie z. B. Polyethylen, Polypropylen oder ein halogenisiertes Thermoplast, wie z. B. Polyvinilchlorid, Polytetrafluorethylen sein. Die Beimischung kann aus in Aethanol oder Ethylalkohol gelöstem wasserlöslichem Lithiumchlorid oder in Isopropanol gelöstem wasserfreiem Tetraaethylammoniumchlorid und/oder deren Mischungen bestehen.

EP 0 491 340 A2

Die Erfindung bezieht sich auf einen Werkstoff für chemische Sensoren, Bezugselektroden o. dgl. Bei einer aus dem DE-GM 86 14 064 bekannten Bezugselektrode ist als Werkstoff für die äußere Umhüllung ein Werkstoff bekannt, welcher aus einem Polymer besteht, welches noch vor dem Aushärtungsprozeß bzw. der Polmerisation mit kristallinem Kaliumchlorid gemischt wird. Im praktischen Betrieb hat sich jedoch herausgestellt, daß, wenn auch in geringem Maße eine Herauslösung des in der Polymermatrix eingeschlossenen Metallsalzes stattfindet, was zu einer Verunreinigung der Meßprobe führt. Dies ist darauf zurückzuführen, daß das kristalline Salz durch das in diesem enthaltene Kristallwasser von der Meßprobe herausgelöst werden kann.

Es ist daher die Aufgabe der Erfindung, einen mechanisch stabilen Werkstoff für chemische Sensore, Bezugselektroden o. dgl. anzugeben, bei welchem im Betrieb keine Herauslösung von Metallsalzen, wie z.B. kristallinem Kaliumchlorid durch die Meßprobe erfolgt und eine Verunreinigung derselben vermieden wird.

Die Lösung dieser Aufgabe erfolgt erfindungsgemäß durch einen Werkstoff, der aus einem Polymer mit einer Beimischung (Füllung) aus einem nicht wässerigen Elektrolyten, der in einem organischen Lösungsmittel gelöste Ionen aufweist, besteht. Das Polymer kann ein Duroplast, wie z.B. Polyestherharz, Epoxyharz oder ein nicht halogenisiertes Thermoplast, wie z.B. Polyethylen, Polypropylen, oder ein halogenisiertes Thermoplast, wie z.B. Polyvinilchlorid oder Polytetrafluorethylen sein. Die Beimischung kann z.B. aus in Aethanol oder Ethylakohol gelöstem wasserlöslichen Lithiumchlorid oder in Isopropanol gelöstem wasserfreien Tetraaethylammoniumchlorid und/oder deren Mischungen bestehen.

Es handelt sich hier also um ein mechanisch stabiles Material, das ionisch nicht durch in Wasser gelöste Ionen von kristallinem Salz, leitend ist, sondern die ionische Leitung erfolgt durch ein Salz, das in einem organischen Lösungsmittel gelöst ist, welches Salz kein Kristallwasser enthält. Das Lösungsmittel ist einem Polymer beigemischt, womit die ionische Leitfähigkeit erzielt wird.

Der Vorteil des Werkstoffes nach der Erfindung besteht darin, daß das Polymermatrix wasserdicht aushärtet, ohne daß dabei Salze aus einer porösen Polymermatrix herausgelöst werden können, wie dies bei dem in der oben genannten Druckschrift beschriebenen Werkstoff möglich ist, bei welchem ein Polymer mit einem wassergelösten Salz gefüllt ist. Polymere oder Monomere sind hydrophob, d.h. Wasser abstoßend, und bei dem in der obigen Druckschrift beschriebenen Stoff bilden sich in der Polymermatrix Kanäle, Blasen, o. dgl. In den Hohlräumen befindet sich das in Wasser gelöste Salz, also der Ionenleiter, durch den die Ionenleitfähigkeit des Polymers gewährleistet ist. Bei dem neuen Stoff sind keine solchen Kanäle vorhanden, da dieser eine homogene Struktur aufweist. Der Werkstoff nach der Erfindung härtet nicht porös und lichtdurchlässig aus und ist spanend bearbeitbar.

Ein Verfahren zur Herstellung eines Werkstoffes nach der Erfindung besteht darin, daß die Beimischung aus dem nicht wässerigen Elektrolyten, der in einem organischen Lösungsmittel gelöst ist, einem Monomer in flüssigem oder pulverförmigem Zustand befindlichen Monomer zugesetzt wird und daß anschließend eine Aushärtung bzw. Polmyerisation durch Erwärmung oder Oxydation oder mittels Photoinitiatoren oder ein anderes vernetzendes Mittel erfolgt.

Der Werkstoff nach der Erfindung läßt sich als chemischer Sensor oder als Brückenkörper von Proben zum wässerigen Bezugselektrolyten oder als Brückenkörper zu einer Elektrode zweiter Art (Metallsalz/Metall, z.B. Silberchlorid/Silber) anwenden. Eine weitere Anwendungsmöglichkeit besteht als Bezugselektrode bei einer Meßvorrichtung zur Messung der Ionenaktivität (Ionenkonzentration) z.B. zur pH-Wertmessung einer Flüssigkeit oder für die Polarographie.

**Patentansprüche**

1.  Werkstoff für chemische Sensoren, Bezugselektroden o. dgl., gekennzeichnet durch ein Polymer mit einer Beimischung (Füllung) aus einem nicht wässerigen Elektrolyten, der in einem organischen Lösungsmittel gelöste Ionen aufweist.

2.  Werkstoff nach Anspruch 1, dadurch gekennzeichnet, daß das Polymer ein Duroplast, wie z.B. Polyesterharz, Epoxydharz oder ein nicht halogenisiertes Thermoplast, wie z.B. Polyethylen, Polypropylen, oder ein halogenisiertes Thermoplast, wie z.B. Polyvinilchlorid, Polytetrafluorethylen ist und daß die Beimischung aus z.B. in Aethanol oder Ethylalkohol gelöstem wasserlöslichem Lithiumchlorid oder in Isopropanol gelöstem wasserfreiem Tetraethylammoniumchlorid und/oder deren Mischungen besteht.

3.  Verfahren zur Herstellung eines Stoffes nach einem der Ansprüche 1 oder 2, dadurch gekennzeichnet, daß die Beimischung (der Zuschlag) einem Monomer in flüssigem oder pulverförmigem Zustand zugesetzt wird und daß anschließend eine Aushärtung bzw. Polymerisation durch drucklose Erwärmung oder durch Erwärmung unter Druck oder durch Oxydation oder mittels Photoinitiatoren oder ein anderes vernetzendes Mittel erfolgt.

4. Anwendung eines Werkstoffes nach einem der Ansprüche 1 oder 2 als chemischer Sensor oder als Brückenkörper von Proben zu wässerigen Bezugselektrolyten oder als Brückenkörper von Proben zu einer Elektrode zweiter Art (Metallsalz/Metall, z.B. Silberchlorid/Silber) oder als Bezugselektrode bei einer Meßvorrichtung zur Messung der Ionenaktivität (Ionenkonzentration) z.B. zur pH-Wertmessung einer Flüssigkeit oder für die Polarographie.